# EUROPEAN PATENT APPLICATION

(11) **EP 4 831 729 A1**
(43) Date of publication of application: **28.10.2026**
(21) Application number: 23962319.2
(22) Date of filing: 19.12.2023
(51) Int. Cl.: G02F 1/1335, G02F 1/13357, G02F 1/1333

(54) **DISPLAY DEVICE**

(71) Applicant: LG Electronics Inc., Yeongdeungpo-gu Seoul 07336 (KR)
(72) Inventor: KIM, Gihwan, Seoul 06772 (KR)
(74) Representative: Vossius & Partner Patentanwälte Rechtsanwälte mbB
(86) International application number: PCT/KR2023/020943
(87) International publication number: WO 2025/135213

(57) **Abstract**

Disclosed is a display device. The display device of the present disclosure may include: a display panel; a frame positioned at a rear of the display panel; a substrate which is positioned between the display panel and the frame, and coupled to the frame; and a heat dissipation plate which is positioned between the substrate and the frame, and coupled to the substrate and the frame, wherein the substrate comprises a plurality of first plates which are elongated and spaced apart from each other, and wherein the heat dissipation plate comprises a bent portion which protrudes forward toward the display panel and is disposed between adjacent first plates among the plurality of first plates.

## Description

### [Technical Field]

The present disclosure relates to a display device.

### [Background Art]

As the information society develops, the demand for display devices is increasing in various forms. In response to this, recently, various display devices such as Liquid Crystal Display Device (LCD), Plasma Display Panel (PDP), Electro luminescent Display (ELD), Vacuum Fluorescent Display (VFD), and Organic Light Emitting Diode (OLED) have been researched and used.

Among these, a LCD panel includes a liquid crystal layer, and a TFT substrate and a color filter substrate that are opposite to each other with a liquid crystal layer interposed therebetween, and may display an image by using light provided from a backlight unit.

As the image quality provided by display devices has recently improved to high quality, research has also actively been conducted on a substrate on which light source such as LED is mounted, a support structure of a reflective sheet for a substrate, and a structure of a support that supports a diffusion plate.

### [Disclosure]

### [Technical Problem]

An object of the present disclosure is to solve the aforementioned problems and other problems.

Another object may be to provide a display device capable of improving the degradation of light performance of a backlight unit.

Another object may be to provide a display device capable of effectively dissipating heat generated from a substrate and a light source.

Another object may be to provide a display device capable of ensuring ease of assembly of a substrate to a heat dissipation plate or frame.

Another object may be to provide a display device capable of increasing the rigidity of a heat dissipation plate or frame.

Another object may be to provide a display device capable of maintaining a constant gap between a diffusion plate and a light source.

Another object may be to provide a supporter capable of being slidably coupled to a heat dissipation plate or frame in a narrow gap between light sources.

Another object may be to provide a structure that improves the stability of a supporter coupled to a heat dissipation plate or frame.

### [Technical Solution]

According to an aspect of the present disclosure for achieving the above or other objects, a display device may include: a display panel; a frame positioned at a rear of the display panel; a substrate which is positioned between the display panel and the frame, and coupled to the frame; and a heat dissipation plate which is positioned between the substrate and the frame, and coupled to the substrate and the frame, wherein the substrate comprises a plurality of first plates which are elongated and spaced apart from each other, and wherein the heat dissipation plate comprises a bent portion which protrudes forward toward the display panel and is disposed between adjacent first plates among the plurality of first plates.

According to another aspect of the present disclosure, a display device may include: a display panel; a frame positioned at a rear of the display panel; and a substrate which is positioned between the display panel and the frame, and coupled to the frame, wherein the substrate comprises a plurality of first plates which are elongated and spaced apart from each other, and wherein the frame comprises a bent portion which protrudes forward toward the display panel and is disposed between adjacent first plates among the plurality of first plates.

### [Advantageous Effects]

The effects of the display device according to the present disclosure are described as follows.

According to at least one of the embodiments of the present disclosure, there may be provided a display device capable of improving the degradation of light performance of a backlight unit.

According to at least one of the embodiments of the present disclosure, there may be provided a display device capable of effectively dissipating heat generated from a substrate and a light source.

According to at least one of the embodiments of the present disclosure, there may be provided a display device capable of ensuring ease of assembly of a substrate to a heat dissipation plate or frame.

According to at least one of the embodiments of the present disclosure, there may be provided a display device capable of increasing the rigidity of a heat dissipation plate or frame.

According to at least one of the embodiments of the present disclosure, there may be provided a display device capable of maintaining a constant gap between a diffusion plate and a light source.

According to at least one of the embodiments of the present disclosure, there may be provided a supporter capable of being slidably coupled to a heat dissipation plate or frame in a narrow gap between light sources.

According to at least one of the embodiments of the present disclosure, there may be provided a structure that improves the stability of a supporter coupled to a heat dissipation plate or frame.

Further scope of the applicability of the present disclosure will become apparent from the following detailed description. However, since various changes and modifications within the concept and scope of the present disclosure are clearly understood by those skilled in the art, specific embodiments such as the detailed description and preferred embodiments of the present disclosure should be understood as being given merely as examples.

### [Description of Drawings]

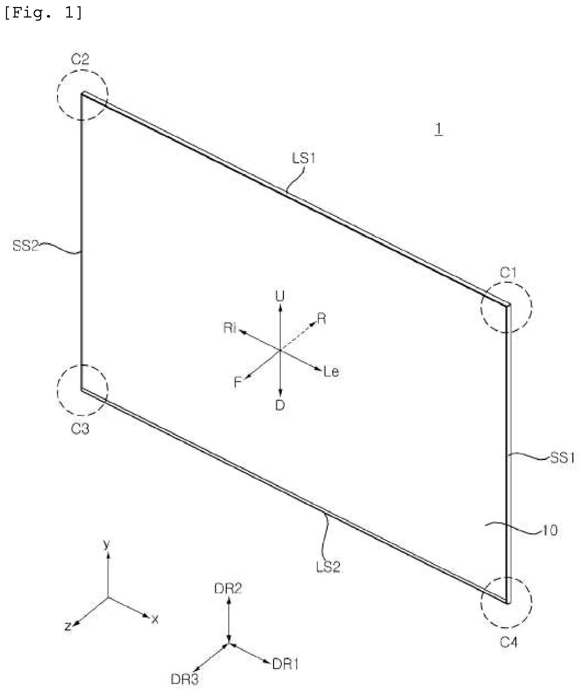

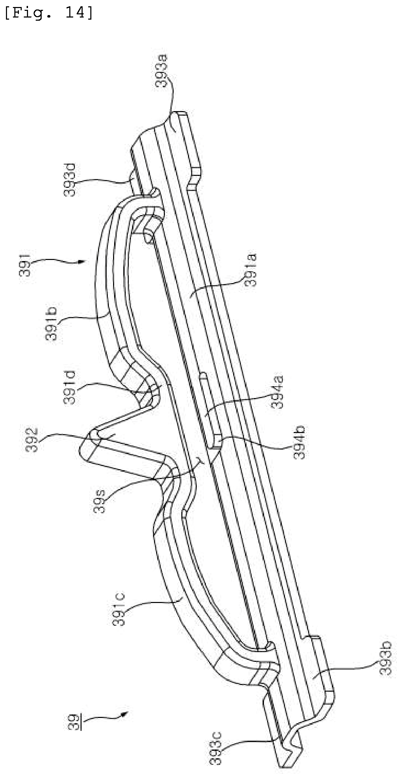

FIGS. 1 to 18 are drawings illustrating examples of a display device according to embodiments of the present disclosure.

### [Mode for Invention]

In the following description, the same or similar components are assigned the same reference numbers, and overlapping descriptions with respect to the same reference numbers may be omitted.

In the following description, suffixes such as "module" and "part" may be used to refer to elements or components. Use of such suffixes herein is merely intended to facilitate description of the specification, and the suffixes do not have any special meaning or function.

In the following description, when it is determined that a detailed description of a well-known technology may obscure the gist of an embodiment of the present disclosure, a detailed description of the well-known technology may be omitted. In the following description, the accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

Terms such as first and second used in the following description may be used. These terms are only for distinguishing the elements from other elements, and the essence, sequence, or order of the elements are not limited by the terms.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Referring to FIG. 1, a display device 1 may include a display panel 10. The display panel 10 may display an image.

The display device 1 may include a first long side LS1, a second long side LS2 opposite to the first long side LS1, a first short side SS1 adjacent to the first long side LS1 and the second long side LS2, and a second short side SS2 opposite to the first short side SS1. Meanwhile, for convenience of explanation, it is shown and described that the lengths of the first and second long sides LS1, LS2 are longer than the lengths of the first and second short sides SS1, SS2, but it is also possible that the lengths of the first and second long sides LS1, LS2 are approximately the same as the lengths of the first and second short sides SS1, SS2.

The direction parallel to the long side LS1, LS2 of the display device 1 may be referred to as a left-right direction or a first direction DR1. The direction parallel to the short side SS1, SS2 of the display device 1 may be referred to as an up-down direction or a second direction DR2. The direction perpendicular to the long side LS1, LS2 and short side SS1, SS2 of the display device 1 may be referred to as a front-rear direction or a third direction DR3.

The direction in which the display panel 10 displays an image may be referred to as a forward direction (F, z), and the opposite direction may be referred to as a rearward direction R. The side of the first long side LS1 may be referred to as an upper side (U, y). The side of the second long side LS2 may be referred to as a lower side D. The side of the first short side SS1 may be referred to as a left side (Le, x). The second side SS2 may be referred to as the right side Ri.

The first long side LS1, the second long side LS2, the first short side SS1, and the second short side SS2 may be referred to as an edge of the display device 1. In addition, a point where the first long side LS1, the second long side LS2, the first short side SS1, and the second short side SS2 meet each other may be referred to as a corner.

For example, the point where the first short side SS1 and the first long side LS1 meet may be referred to as a first corner C1. The point where the first long side LS1 and the second short side SS2 meet may be referred to as a second corner C2. The point where the second short side SS2 and the second long side LS2 meet may be referred to as a third corner C3. The point where the second long side LS2 and the first short side SS1 meet may be referred to as a fourth corner C4.

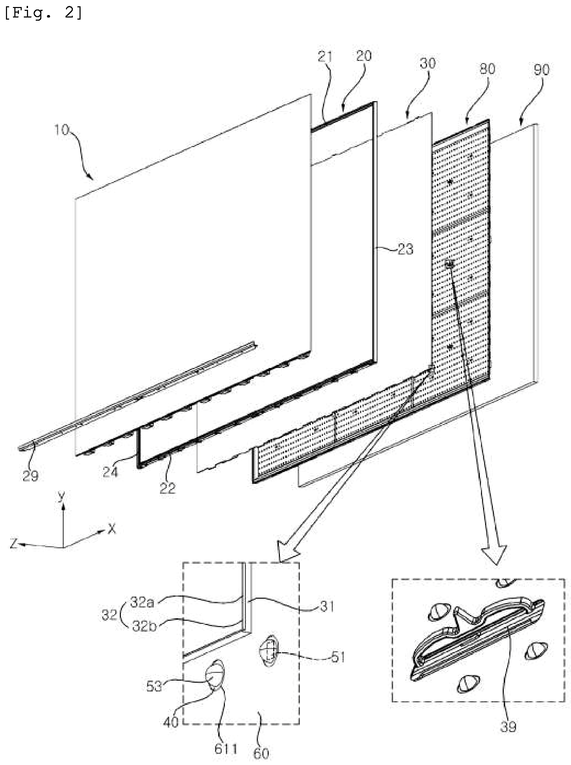

Referring to FIG. 2, the display device may include a display panel 10, a side frame 20, a backlight unit, a frame 80, and a back cover 90.

The display panel 10 may form the front surface of the display device and may display an image. The display panel 10 may display an image by having a plurality of pixels that output Red, Green, or Blue (RGB) for each pixel in accordance with timing. The display panel 10 may be divided into an active area where an image is displayed and a de-active area where an image is not displayed. The display panel 10 may include a front substrate and a rear substrate which are opposite to each other with a liquid crystal layer in between. The display panel 10 may be referred to as an LCD panel.

The front substrate may include a plurality of pixels composed of red, green, and blue subpixels. The front substrate may output light corresponding to the color of red, green, or blue according to a control signal.

The rear substrate may include switching elements. The rear substrate may switch a pixel electrode. For example, the pixel electrode may change the molecular arrangement of a liquid crystal layer according to a control signal input from the outside. The liquid crystal layer may include liquid crystal molecules. The arrangement of the liquid crystal molecules may change in response to a voltage difference generated between a pixel electrode and a common electrode. The liquid crystal layer may transmit light provided by the backlight unit to the front substrate or block it.

The side frame 20 may extend along the circumference of the display panel 10. The side frame 20 may cover the side surface of the display panel 10. The side frame 20 may be coupled to the display panel 10, and may support the display panel 10. The side frame 20 may be referred to as a guide panel.

The backlight unit may be positioned at the rear of the display panel 10. The backlight unit may be coupled to the frame 80 at the front of the frame 80. The backlight unit may be driven in a full driving mode or in a partial driving mode such as local dimming or impulsive. The backlight unit may include light sources 51 that provide light forward, a substrate 40 on which the light sources 51 are mounted, lenses 53 covering the light sources 51, a reflective sheet 60 covering the front surface of the substrate 40, and an optical layer 30 positioned in front of the reflective sheet 60.

The light source 51 may be an Light Emitting Diode (LED) chip or a package containing at least one LED chip. For example, the light source 51 may be a colored LED that emits at least one color among colors such as red, blue, green, etc., or a white LED. For example, the light source 51 may be a mini LED. A power device (not shown) of the display device may provide power to the light source 51 through the substrate 40.

Each of a plurality of lenses 53 may cover each of a plurality of light sources 51. A receiving portion (not shown) may be formed on the lower surface of the lens 53, and may surround the light source 51. A dome portion (not shown) may form the upper surface of the lens 53, and may have a substantially hemispherical shape. The lens 53 may include at least one of silicon, polymethyl methacrylate (PMMA), and polycarbonate (PC). Light provided by the light source 51 may be refracted or reflected by the lens 53 and spread out with a wider beam angle than the light source 51.

The reflective sheet 60 may include at least one of a metal and a metal oxide which are reflective materials. For example, the reflective sheet 60 may include a metal and/or a metal oxide having a high reflectivity, such as at least one of aluminum Al, silver Ag, gold Au, and titanium dioxide TiO2. For example, a resin may be deposited or applied on the reflective sheet 60, and may diffuse the light of the light source 51.

The optical layer 30 may be opposite to the display panel 10 with respect to the side frame 20. The optical layer 30 may evenly transmit the light of the light source 51 to the display panel 10. The optical layer 30 may include a diffusion plate 31 and an optical sheet 32.

The diffusion plate 31 may be positioned between the reflective sheet 60 and the optical sheet 32. The diffusion plate 31 may diffuse the light from the light source 51. In addition, an air gap may be formed between the reflective sheet 60 and the diffusion plate 31. The air gap may serve as a buffer, and the light from the light source 51 may be spread widely by the air gap.

A supporter 39 may be positioned between the reflective sheet 60 and the diffusion plate 31, one side may be coupled to at least one of the reflective sheet 60, a heat dissipation plate 83, and the frame 80, and the other side may support the diffusion plate 31. The supporter 39 may be referred to as a spacer.

The optical sheet 32 may be adjacent to or in contact with the front surface of the diffusion plate 31. The optical sheet 32 may include at least one sheet. For example, the optical sheet 32 may include a plurality of sheets having different functions, and the plurality of sheets may be attached to or in close contact with each other. For example, a first optical sheet 32a may be a diffusion sheet, and a second optical sheet 32b may be a prism sheet. The diffusion sheet may prevent the light emitted from the diffusion plate 31 from being partially concentrated, thereby making the light distribution uniform. The prism sheet may concentrate the light emitted from the diffusion sheet and provide it to the display panel 10. At this time, the number and/or position of the diffusion sheet and the prism sheet may be changed.

For example, the optical sheet 32 may change the wavelength or color of the light provided from the light source 51. For example, the optical sheet 32 may include a red phosphor and/or a green phosphor. In this case, the light source 51 may provide blue light, and the optical sheet 32 may change the color of light of the light source 51 into white. The optical sheet 32 may be referred to as a Quantum Dot (QD) Sheet.

A frame 80 may be positioned at the rear of the backlight unit. The display panel 10, the side frame 20, and the backlight unit may be coupled to the frame 80. The frame 80 may support the components of the display device described above and below. For example, the frame 80 may include a metal material such as an aluminum alloy. The frame 80 may be referred to as a main frame, a module cover, or a cover bottom.

The back cover 90 may cover the rear of the frame 80, and may be coupled to the frame 80. For example, the back cover 90 may be an injection molded product of resin material. As another example, the back cover 90 may include a metal material.

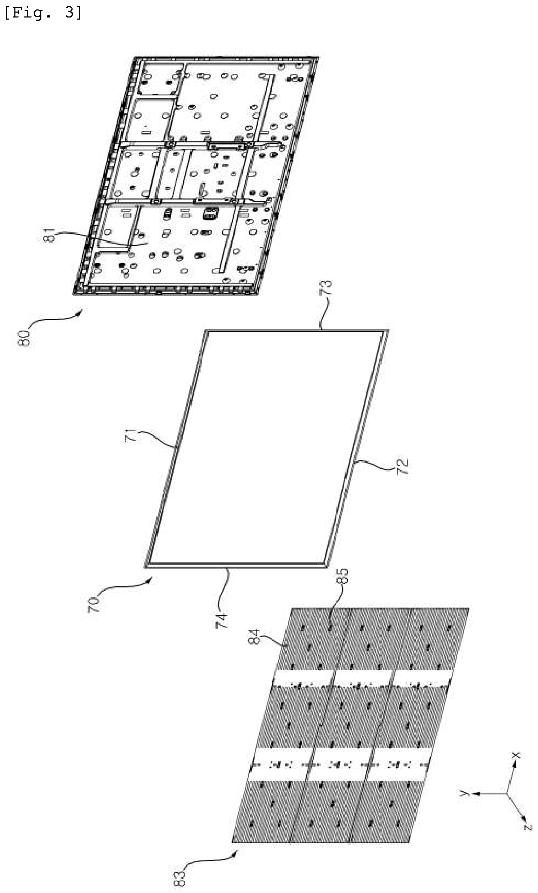

Referring to FIG. 3, the frame 80 may include a flat plate portion 81. The flat plate portion 81 may form the central area of the frame 80. The heat dissipation plate 83 may cover the front of the flat plate portion 81, and may be coupled to the flat plate portion 81. The front surface of the heat dissipation plate 83 is formed of a flat plane, and a protruding portion 84 protruding forward may be formed in a partial area of the front surface. The protruding portion 84 may be provided with a coupling portion 85 into which the supporter 39 may be inserted and fixed. The protruding portion 84 may be referred to as a curved portion or a support rib.

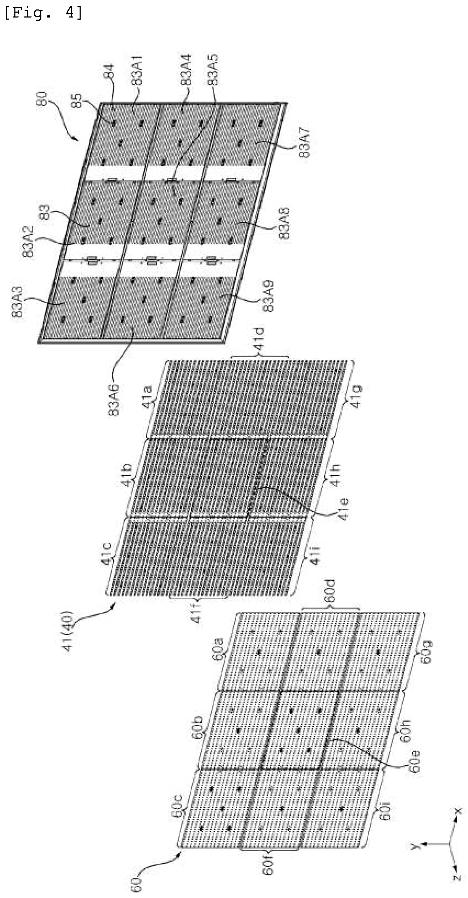

A plurality of coupling portions 85 may be formed on the front surface of the heat dissipation plate 83. A plurality of coupling portions 85 may be formed in each of a plurality of areas 83A1, 83A2, 83A3, 83A4, 83A5, 83A6, 83A7, 83A8, 83A9 of the heat dissipation plate 83 (see FIG. 4). The plurality of coupling portions 85 may be arranged symmetrically in the up-down and left-right directions. In this case, each of the plurality of supporters 39 may be coupled to each of the plurality of coupling portions 85. The number and arrangement of the supporters 39 provided in the display device may be determined variably by considering the size and installation environment of the display device.

As another example, the display device may not be provided with a heat dissipation plate 83. A protruding portion 84 protruding forward may be formed in a partial area of the front surface of the flat plate portion 81 on the flat plate portion 81 of the frame 80. The protruding portion 84 may be provided with a coupling portion 85 into which the supporter 39 may be inserted and fixed.

Hereinafter, for convenience, it is described that the protruding portion 84 and the coupling portion 85 are formed on the front surface of the heat dissipation plate 83, but the features related to the protruding portion 84 and the coupling portion 85 described below may also be identically applied when the protruding portion 84 and the coupling portion 85 are formed on the frame 80.

A side portion 70 may be disposed on an edge of the heat dissipation plate 83. The side portion 70 may include at least one of a metal and a metal oxide which are a reflective material. For example, the side portion 70 may include a metal and/or a metal oxide having a high reflectivity, such as at least one of aluminum Al, silver Ag, gold Au, and titanium dioxide TiO2. For example, resin may be deposited or applied on the side portion 70.

In addition, the side portion 70 may include a first side portion 71, a second side portion 72, a third side portion 73, and a fourth side portion 74. The side portion 70 may be referred to as a chamfer portion.

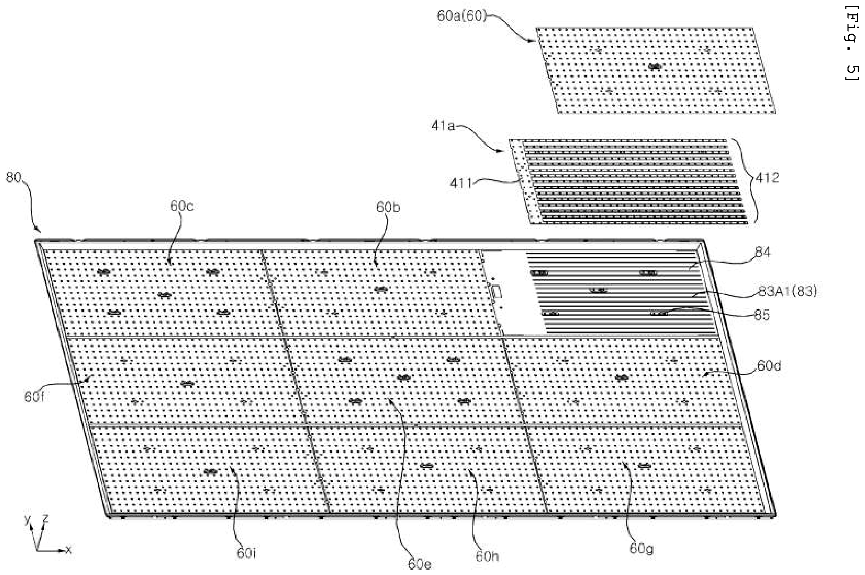

Referring to FIGS. 4 and 5, the substrate 40 may cover the front of the heat dissipation plate 83, and may be coupled to the heat dissipation plate 83. For example, the substrate 40 may include at least one of polycarbonate PC, polyethylene terephthalate PET, glass, and silicon. The substrate 40 may be a Printed Circuit Board (PCB).

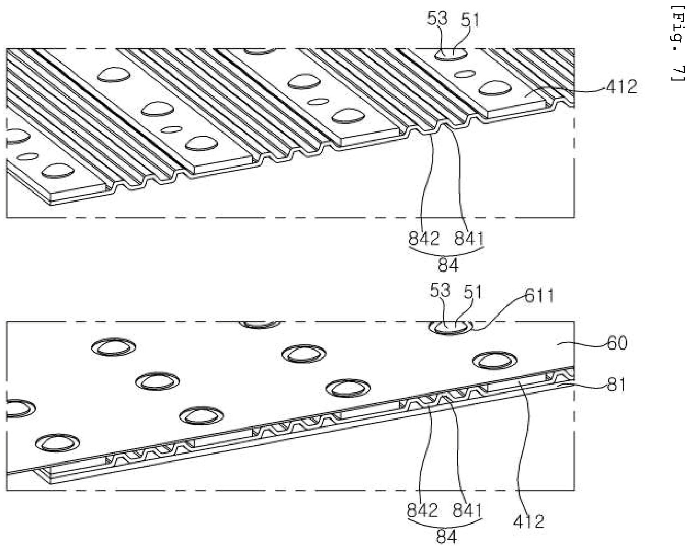

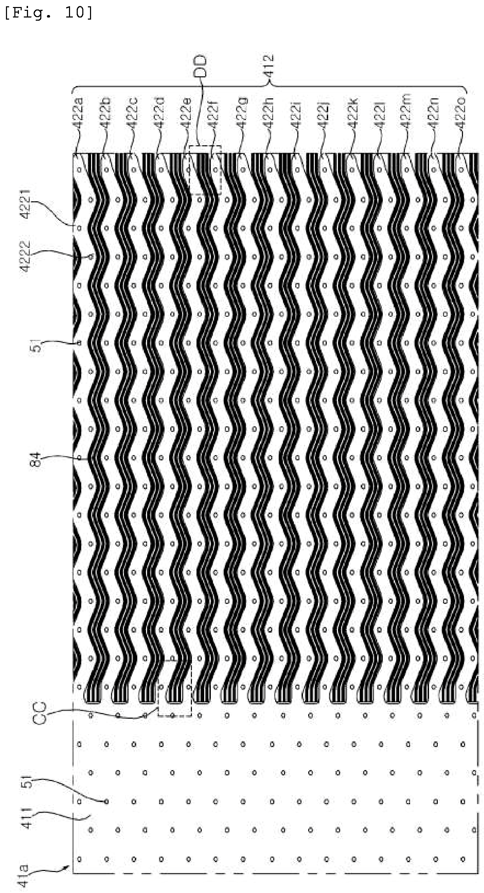

The substrate 40 may have an overall fork shape. The substrate 40 may include straps. The strap may be referred to as a first plate. The straps 412, 422 may be extended long horizontally. For example, the straps 412 included in the substrate 41 may be extended long horizontally in a straight line (see FIG. 7). For example, the straps 422 included in the substrate 42 may be extended long horizontally, but may have a shape that bends in a zigzag shape in a direction intersecting with the horizontal direction (see FIG. 10). The straps may be spaced apart from each other in the vertical direction. In this specification, the reference numerals for the substrate 41 and the substrate 42 are distinguished according to the shape of the straps, but both the substrates 41 and 42 are embodiments of the substrate 40, and include the features of the substrate 40 described in this specification.

The substrate 40 may include a second plate 411, 421 and a plurality of first plates 412, 422. The second plate 411, 421 may be extended vertically. The plurality of first plates 412, 422 may be extended horizontally from one long side of the second plate 411, 421 and may be spaced apart from each other vertically.

There may be provided at least one substrate 40. The substrate 40 may include a plurality of adjacent substrates 41a, 41b, 41c, 41d, 41e, 41f, 41g, 41h, 41i. A first substrate 41a, a second substrate 41b, a third substrate 41c, a fourth substrate 41d, a fifth substrate 41e, a sixth substrate 41f, a seventh substrate 41g, an eighth substrate 41h, and a ninth substrate 41i may be arranged on a virtual horizontal plane (i.e., the XY plane). Each of the plurality of substrates 41a, 41b, 41c, 41d, 41e, 41f, 41g, 41h, 41i may be coupled to each of the plurality of areas 83A1, 83A2, 83A3, 83A4, 83A5, 83A6, 83A7, 83A8, 83A9 of the heat dissipation plate 83.

Each of a plurality of lenses 53 may cover each of a plurality of light sources 51 mounted on the substrate 40. A power device (not shown) of the display device may supply power to the light sources 51 through connectors (not shown) mounted on the rear surface of the substrate 40.

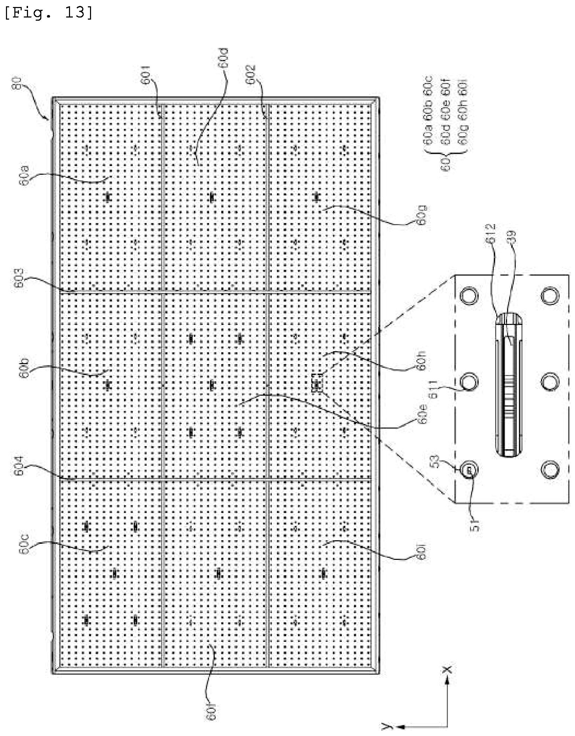

The reflective sheet 60 may cover the front of the substrate 40, and may be coupled to the substrate 40. The reflective sheet 60 may cover the second plate 411, 421, a plurality of first plates 412, 422, and spaces between the plurality of first plates 412, 422. The lenses 53 (see FIG. 2 and FIG. 13) may be positioned in the holes 611 of the reflective sheet 60.

The reflective sheet 60 may have a rectangular plate shape. There may be provided at least one reflective sheet 60. The reflective sheet 60 may include a plurality of adjacent reflective sheets 60a, 60b, 60c, 60d, 60e, 60f, 60g, 60h, 60i. A first reflective sheet 60a, a second reflective sheet 60b, a third reflective sheet 60c, a fourth reflective sheet 60d, a fifth reflective sheet 60e, a sixth reflective sheet 60f, a seventh reflective sheet 60g, an eighth reflective sheet 60h, and a ninth reflective sheet 60i may be positioned on a virtual horizontal plane (i.e., the XY plane).

Each of the plurality of reflective sheets 60a, 60b, 60c, 60d, 60e, 60f, 60g, 60h, 60i may be coupled to each of the plurality of substrates 41a, 41b, 41c, 41d, 41e, 41f, 41g, 41h, 41i. The size of each of the plurality of reflective sheets may correspond to the size of each of the plurality of substrates. The size of the first reflective sheet 60a may correspond to the size of the first substrate 41a. For example, the size of the first reflective sheet 60a may be substantially the same as the size of the first substrate 41a.

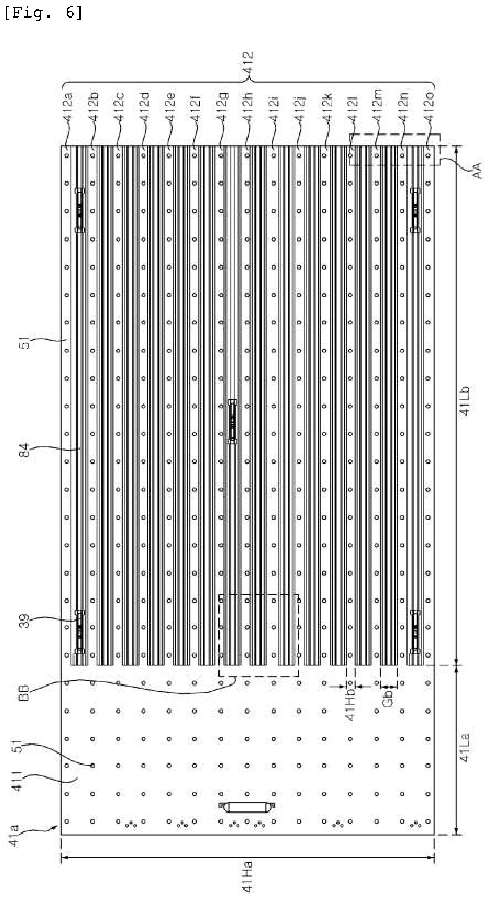

Referring to FIG. 6 together with FIG. 5, the first substrate 41a may include a plurality of first plates 412 and a second plate 411. The first substrate 41a may have an overall fork-type shape. Meanwhile, the second plate 411 may be referred to as a vertical plate or body, and the first plate 412 may be referred to as a horizontal plate or rib.

The second plate 411 may be extended long. For example, the longitudinal direction of the second plate 411 may be parallel to the up-down direction. A connector (not shown) may be mounted on one surface of the second plate 411. A plurality of first plates 412 may be extended from one long side of the second plate 411 in a direction intersecting with the longitudinal direction of the second plate 411, and may be spaced apart from each other in the longitudinal direction of the second plate 411. The direction in which the plurality of first plates 412 are spaced apart from each other may be parallel to the longitudinal direction of the second plate 411, i.e., the up-down direction. The length 41Lb of each of the plurality of first plates 412 may be greater than the length 41Ha of the second plate 411. The width 41La of the second plate 411 may be defined in the longitudinal direction of the plurality of first plates 412. The width 41Hb of each of the plurality of first plates 412 may be defined in the longitudinal direction of the second plate 411, and may be smaller than the width 41La of the second plate 411. Meanwhile, the longitudinal direction of the plurality of first plates 412 may be referred to as the longitudinal direction of the first substrate 41a.

A first-first plate 412a, a first-second plate 412b, a first-third plate 412c, a first-fourth plate 412d, a first-fifth plate 412e, a first-sixth plate 412f, a first-seventh plate 412g, a first-eighth plate 412h, a first-ninth plate 412i, a first-tenth plate 412j, a first-eleventh plate 412k, a first-twelfth plate 412l, a first-thirteenth plate 412m, a first-fourteenth plate 412n, and a first-fifteenth plate 412o may be arranged sequentially in the up-down direction.

A plurality of light sources 51 may be mounted on the second plate 411 and a plurality of first plates 412, and may be spaced apart from each other. For example, a plurality of light sources 51 may be attached or bonded to the first substrate 41. A plurality of light sources 51 may be positioned in rows and columns on the second plate 411 and a plurality of first plates 412. The row may be defined in the left-right direction, and the column may be defined in the up-down direction. For example, the light source 51 may be an Light Emitting Diode (LED) chip or a package containing at least one LED chip. For example, the light source 51 may be a colored LED that emits at least one color among colors such as red, blue, green, etc., or a white LED. For example, the light source 51 may be a mini LED.

Each of the plurality of lenses 53 may cover each of the plurality of light sources 51. A receiving portion (no reference numeral) may be formed on the lower surface of the lens 53, and may surround the light source 51. A cover portion (no reference numeral) may form the upper surface of the lens 53. For example, the cover portion may have a dome shape or a shape in which two domes are overlapped. For example, the lens 53 may be a lens with asymmetric light distribution. The lens 53 may include at least one of resin, silicone, polymethyl methacrylate (PMMA), and polycarbonate (PC). Light provided from the light source 51 may be refracted or reflected by the lens 53 and spread out with a wider beam angle than the light source 51. That is, sufficient light may be secured over a wide range in proportion to the number and position of light sources 51 mounted on the first substrate 41a. For example, the lens 53 may be a refractive lens. Meanwhile, the lens 53 may be referred to as a secondary lens.

The first reflective sheet 60a may cover the second plate 411 of the first substrate 41a and the plurality of first plates 412, as well as a space between the plurality of first plates 412. Accordingly, a sufficient amount of light may be secured over a wide range in relation to the number and positions of the light sources 51 mounted on the first substrate 41a. Meanwhile, a plurality of lens holes 611 may be formed by penetrating the first reflective sheet 60a, and a plurality of lenses 53 may be disposed.

The supporter 39 may be positioned between the plurality of first plates 412. The supporter 39 may be extended long in the longitudinal direction, i.e., the left-right direction, of the plurality of first plates 412.

Meanwhile, the description of the first substrate 41a and the first reflective sheet 60a described above may be identically applied to the remaining substrates 41b, 41c, 41d, 41e, 41f, 41g, 41h, 41i (see FIG. 4) and the remaining reflective sheets 60b, 60c, 60d, 60e, 60f, 60g, 60h, 60i (see FIG. 4).

For example, the first substrate 41a may have substantially the same shape as the remaining substrates 41b, 41c, 41d, 41e, 41f, 41g, 41h, 41i. For example, one substrate may be separated into any two of the substrates 41 through a cutting process. Accordingly, the manufacturing cost of the substrate 41 may be reduced.

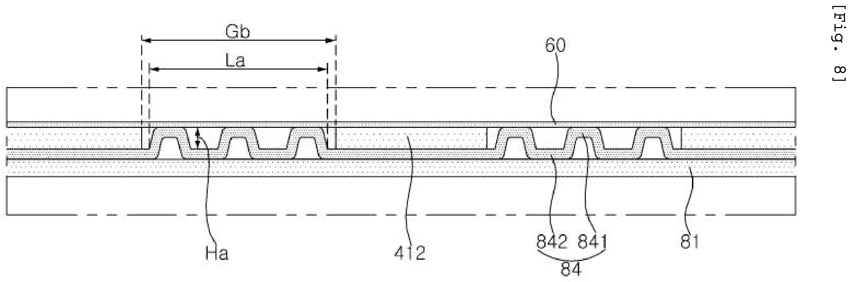

FIG. 7 is an enlarged perspective view of the "AA" area of FIG. 6, and FIG. 8 is a cross-sectional view of the "AA" area viewed from the left-right direction.

Referring to FIG. 7 and FIG. 8 together with FIG. 6, the heat dissipation plate 83 may be positioned at the front of the frame 80, and may be coupled to the frame 80. That is, the heat dissipation plate 83 may be provided on the front surface of the frame 80. The heat dissipation plate 83 may cover the central area of the frame 80. The heat dissipation plate 83 may provide a flat front surface on which the substrate 40 is installed.

The substrate 40 may be positioned in front of the heat dissipation plate 83 and may be coupled to the heat dissipation plate 83. That is, the substrate 40 may be provided on the front surface of the heat dissipation plate 83.

A protruding portion 84 may be formed on the heat dissipation plate 83. The protruding portion 84 may protrude forward toward the display panel 10. The protruding portion 84 may be disposed between adjacent first plates among the plurality of first plates 412, 422. The protruding portion 84 may extend long from one end of the first plates 412, 422 to one side surface of the second plate 411, 421 in the longitudinal direction of the first plates 412, 422.

The protruding portion 84 may include at least one support rib 841 protruding forward. For example, the protruding portion 84 may include three protrusions. Each support rib 841 may have a shape that protrudes convexly forward from the heat dissipation plate 83 and extends long in the longitudinal direction of the first plates 412, 422. The support ribs 841 may be referred to as a ridge or an elevation portion. The support ribs 841 adjacent to each other may have a shape that is convex rearward. The space between adjacent support ribs 841 may be referred to as a groove or a recessed portion. The height by which the support ribs 841 protrude forward may be defined as a height Ha of the protruding portion 84. The height Ha by which the protruding portion 84 protrudes forward from the heat dissipation plate 83 may be equal to or smaller than the thickness of the substrate 40 defined in the front-rear direction. The height Ha by which the protruding portion 84 protrudes forward from the heat dissipation plate 83 may be equal to or smaller than the thickness of the first plates 412, 422. The width at which at least one support rib 841 is disposed adjacent to each other in the longitudinal direction of the second plate 411, 421 may be defined as a width La of the protruding portion 84. The width La of the protruding portion 84 may be equal to or smaller than a gap Gb between adjacent first plates.

Accordingly, the protruding portion 84 may support the reflective sheet 60 disposed on the front surface of the substrate 40. The protruding portion 84 may support the reflective sheet 60 by contacting at least a portion of the rear surface of the reflective sheet 60.

As the protruding portion 84 contacts the rear surface of the reflective sheet 60 to support the reflective sheet 60, the reflective sheet may be prevented from sagging rearward between adjacent first plates, and light emitted from the light source may be uniformly reflected toward the optical layer 30 by the reflective sheet.

The protruding portion 84 may be formed as one body with the heat dissipation plate 83. For example, the heat dissipation plate 83 may be processed by press forming, and the protruding portion 84 may be formed on the heat dissipation plate 83 by processing. The heat dissipation plate 83 may include a thermally conductive material. For example, the heat dissipation plate 83 may include a material with excellent thermal conductivity, such as aluminum, graphite, copper, etc.

As the heat dissipation plate includes a thermally conductive material, and the protruding portion is disposed to protrude forward into a space between adjacent first plates, heat generated from the substrate and the light source may be effectively dissipated by the heat dissipation plate and the protruding portion.

In addition, the rigidity of the heat dissipation plate may be enhanced by forming the protruding portion on the heat dissipation plate.

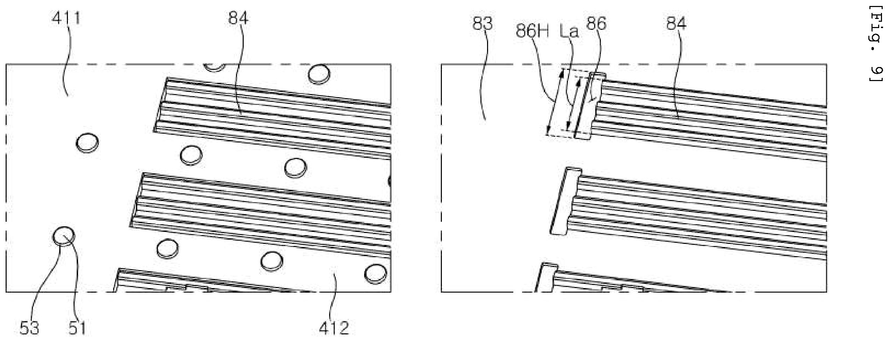

FIG. 9 is an enlarged perspective view of the "BB" area of FIG. 6.

Referring to FIG. 9 together with FIG. 6, one end of the protruding portion 84 may support the second plate 411, 421. One end of the protruding portion 84 may come into contact with the second plate 411, 421. One end of the protruding portion 84 may have a shape that is cut in the longitudinal direction and/or the front-rear direction of the second plate 411, 421. One end of the protruding portion 84 may have a flat cross-section in the longitudinal direction and/or the front-rear direction of the second plate 411, 421.

A plurality of holes 86 may be formed in the heat dissipation plate 83. The hole 86 may be disposed adjacent to one end of the protruding portion 84, and may extend long in the longitudinal direction of the second plate 411, 421, and the width direction or up-down direction of the protruding portion 84. Each of the plurality of holes 86 may be formed adjacent to one end of each protruding portion 84. The extension length 86H of the hole 86 may be greater than or equal to the width La of the protruding portion 84. The extension length 86H of the hole 86 may be greater than or equal to a gap Gb between adjacent first plates.

When the heat dissipation plate 83 is processed by press forming, the hole 86 is formed at one end of the protruding portion 84, so that one end of the protruding portion 84 may have a shape that is cut in the longitudinal direction and/or the front-rear direction of the second plate 411, 421. The flat cross-section of one end of the protruding portion 84 may come into contact with one side surface of the second plate 411, 421.

Accordingly, when a substrate having a fork shape is coupled to a heat dissipation plate, the substrate may be accurately disposed on the heat dissipation plate. In addition, for accurate alignment of the substrate, a guide hole required to be provided on the substrate may be eliminated or the number thereof may be minimized. In addition, ease of assembly of the substrate to the heat dissipation plate or frame may be ensured.

Referring to FIG. 10 together with FIG. 5, a first substrate 42a may include a plurality of first plates 422 and a second plate 421. The first substrate 42a may have an overall fork-type shape. The plurality of first plates 422 may have a shape that extends long in the horizontal direction and is bent in a zigzag shape in a direction intersecting with the horizontal direction.

The second plate 421 may be extended long in the up-down direction. A connector (not shown) may be mounted on one surface of the second plate 421. A plurality of first plates 422 may extend from one long side of the second plate 421 in a direction intersecting with the longitudinal direction of the second plate 421, and may be spaced apart from each other in the longitudinal direction of the second plate 421. The direction in which the plurality of first plates 422 are spaced apart from each other may be parallel to the longitudinal direction of the second plate 421, i.e., the up-down direction. The length of each of the plurality of first plates 422 may be greater than the length of the second plate 421. The width of the second plate 421 may be defined in the longitudinal direction of the plurality of first plates 422. The width of each of the plurality of first plates 422 may be defined in the longitudinal direction of the second plate 421, and may be smaller than the width of the second plate 421. The longitudinal direction of the plurality of first plates 422 may be referred to as a longitudinal direction of the first substrate 42a.

A first-first plate 422a, a first-second plate 422b, a first-third plate 422c, a first-fourth plate 422d, a first-fifth plate 422e, a first-sixth plate 422f, a first-seventh plate 422g, a first-eighth plate 422h, a first-ninth plate 422i, a first-tenth plate 422j, a first-eleventh plate 422k, a first-twelfth plate 422l, a first-thirteenth plate 422m, a first-fourteenth plate 422n, and a first-fifteenth plate 422o may be arranged sequentially in the up-down direction.

A plurality of light sources 51 may be mounted on the second plate 421 and a plurality of first plates 422, and may be spaced apart from each other. For example, a plurality of light sources 51 may be attached or bonded to the first substrate 42a. A plurality of light sources 51 may be positioned in rows and columns on the second plate 421 and a plurality of first plates 422. The row may be defined in the left-right direction, and the column may be defined in the up-down direction.

The plurality of first plates 422 may have a shape that extends long in the horizontal direction, and bends in a zigzag shape in a direction intersecting with the horizontal direction. The first plates 422 may be provided with at least one first bending portion 4221 and at least one second bending portion 4222. The first bending portion 4221 may protrude convexly in a first direction intersecting with the longitudinal direction of the first plates 422. For example, the upper surface of the first bending portion 4221 may protrude convexly in the upward direction, and the lower surface of the first bending portion 4221 may be concavely indented in the upward direction. The second bending portion 4222 may extend from the first bending portion 4221 and protrude convexly in the opposite direction to the first direction. For example, the lower surface of the second bending portion 4222 may protrude convexly in the downward direction, and the upper surface of the second bending portion 4222 may be concavely indented in the downward direction. The first bending portion 4221 and the second bending portion 4222 may be arranged alternately along the longitudinal direction of the first plates 422.

The protruding portion 84 may have a shape corresponding to the zigzag shape of the first plates 422. The protruding portion 84 may have a shape corresponding to a gap formed between adjacent first plates. The protruding portion 84 may have a shape corresponding to the shape in which the first bending portion 4221 and the second bending portion 4222 protrude, between adjacent first plates. That is, the protruding portion 84 may extend along the longitudinal direction of the first plates 422, and may have a shape in which a portion that bends convexly upward and a portion that bends convexly downward are alternately repeated.

The first reflective sheet 60a may cover not only the second plate 421 of the first substrate 42a and the plurality of first plates 422, but also the space between the plurality of first plates 422. Accordingly, a sufficient amount of light may be secured over a wide range in relation to the number and position of the light source 51 mounted on the first substrate 42a. Meanwhile, a plurality of lens holes 611 may be formed by penetrating the first reflective sheet 60a, and a plurality of lenses 53 may be disposed.

The first substrate 42a may have substantially the same shape as the remaining substrates. For example, one substrate may be separated into any two of the substrates 42 through a cutting process. Accordingly, the manufacturing cost of the substrate 42 may be reduced.

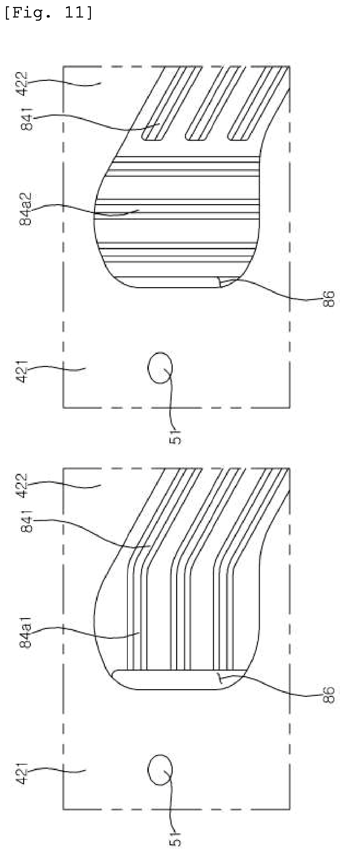

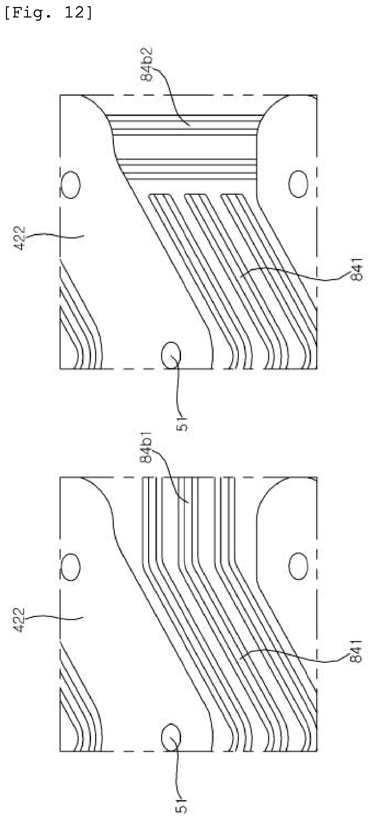

FIG. 11 is a plan view showing an enlarged view of the "CC" area of FIG. 10, and FIG. 12 is a plan view showing an enlarged view of the "DD" area of FIG. 10.

Referring to FIG. 11 together with FIG. 10, the protruding portion 84 may include at least one support rib 841 protruding forward. Each of the support ribs 841 may protrude convexly forward from the heat dissipation plate 83 and have a shape corresponding to the curved shape of the first plates 422.

The protruding portion 84 may include a guide rib 84a, 84b. The guide rib 84a, 84b may be disposed at both ends or at one end of the support rib 841 in the longitudinal direction. A first guide rib 84a may be disposed at one end of the support rib 841 adjacent to the second plate 421. The first guide rib 84a may be disposed between the second plate 421 and the support rib 841. The first guide rib 84a may be extended long in one direction.

For example, a first guide rib 84a1 may extend in a direction intersecting with the longitudinal direction of the second plate 421. One end of the first guide rib 84a1 may be connected to the support rib 841, and the other end of the first guide rib 84a1 may have a shape cut in the longitudinal direction and/or front-rear direction of the second plate 421. The other end of the first guide rib 84a1 may have a flat cross section in the longitudinal direction and/or front-rear direction of the second plate 421. The flat cross section of the first guide rib 84a1 may come into contact with one side surface of the second plate 421.

For example, a first guide rib 84a2 may extend in the longitudinal direction of the second plate 421. One end and the other end of the first guide rib 84a2 may have a shape that is cut in a direction intersecting with the longitudinal direction of the second plate 421 and/or in the front-rear direction. The cross-sections of one end and the other end of the first guide rib 84a2 may come into contact with one side surface of adjacent first plates 422.

Referring to FIG. 12 together with FIG. 10, a second guide rib 84b of the protruding portion 84 may be disposed at the other end of the support rib 841. The second guide rib 84b may be extended long in one direction.

For example, a second guide rib 84b1 may be extended in a direction intersecting with the longitudinal direction of the second plate 421. One end of the second guide rib 84b1 may be connected to the support rib 841, and the other end of the second guide rib 84b1 may have a shape cut in the longitudinal direction and/or the front-rear direction of the second plate 421. The other end of the second guide rib 84b1 may have a flat cross section in the longitudinal direction and/or the front-rear direction of the second plate 421. The cross section of the other end of the second guide rib 84b1 may be aligned parallel to the distal ends of adjacent first plates 422 in the longitudinal direction of the second plate 421.

For example, a second guide rib 84b2 may extend in the longitudinal direction of the second plate 421. One end and the other end of the second guide rib 84b2 may have a shape cut in a direction intersecting with the longitudinal direction of the second plate 421 and/or the front-rear direction. The cross-sections of one end and the other end of the second guide rib 84b2 may come into contact with one side surface of the adjacent first plates 422.

Accordingly, when a substrate having a zigzag shape is coupled to a heat dissipation plate, the substrate may be accurately disposed on the heat dissipation plate. In addition, for accurate alignment of the substrate, a guide hole required to be provided on the substrate may be eliminated or the number thereof may be minimized. Furthermore, ease of assembly of the substrate to the heat dissipation plate or frame may be ensured.

Referring to FIGS. 13 to 15, the supporter 39 may be coupled to at least one of the reflective sheet 60, the heat dissipation plate 83, and the frame 80. At least a portion of the supporter 39 may protrude forward of the reflective sheet 60 through the hole 612 of the reflective sheet 60.

The supporter 39 may include a body 391, a tip 392, a plurality of legs 393, and a fixing portion 394. The body 391 may be referred to as an elastic portion or a deformation portion. A tip 392 may be referred to as a head, a front end portion, or a tower. The legs 393 may be referred to as a fastening portion or an engagement portion.

The body 391 may include a base 391a and an elastic portion 391b, 391c, 391d.

The base 391a may extend long in a left-right direction, may be formed to be narrow vertically, and may be formed to be thin in a front-rear direction. The direction in which the base 391a extends long may be defined as a longitudinal direction of the supporter 39. The base 391a may have a shape corresponding to the support rib 841 of the protruding portion 84. The front surface of the base 391a may protrude convexly forward, and the rear surface may be concavely recessed forward. The shape of the recessed rear surface may correspond to the shape of the support rib 841 protruding forward. The length of the base 391a may be greater than the length of the elastic portion 391b, 391c, 391d.

One end and the other end of the elastic portion 391b, 391c, 391d may be fixed to the front surface of the base 391a. The elastic portion 391b, 391c, 391d may have an overall semicircular shape with a central portion recessed inward. The elastic portion 391b, 391c, 391d may form an arc in a direction from the base 391a toward the optical layer 30. A buffer space 39s may be formed between the base 391a and the elastic portion 391b, 391c, 391d. The elastic portion 391b, 391c, 391d may be referred to as a bridge.

A first part 391b may form one end of the elastic portion 391b, 391c, 391d, and may be bent. A second part 391c may form the other end of the elastic portion 391b, 391c, 391d, and may be bent. A third part 391d may be positioned between the first part 391b and the second part 391c, and may connect the first part 391b and the second part 391c.

The tip 392 may protrude forward from the third part 391d. The front end of the tip 392 may be positioned further forward than the first part 391b and the second part 391c. The tip 392 may be positioned furthest forward from the base 391a.

The legs 393 may protrude from the base 391a in a direction intersecting with the longitudinal direction of the supporter 39. The legs 393 may protrude from the base 391a toward the first plate 412, 422 of the substrate 40. For example, the legs 393 may include a first leg 393a protruding from one end of the base 391a in a direction intersecting with the longitudinal direction of the supporter 30, a second leg 393b protruding from the other end of the base 391a in the direction in which the first leg 393a protrudes, a third leg 393c protruding from the other end of the base 391a in a direction opposite to that of the second leg 393b, and a fourth leg 393d protruding from one end of the base 391a in a direction opposite to that of the first leg 393a.

The fixed portion 394 may include a hole 394b penetrating the base 391a in the front-rear direction, a fixed leg 394a extending into the interior of the hole from one side of the hole 394b, and a fixed protrusion 394c protruding from one end of the fixed leg 394a toward the rear of the fixed leg 394a. The fixed protrusion 394c may be positioned at the rear of the tip 392 in the front-rear direction. The fixed protrusion 394c may protrude from the base 391a toward the heat dissipation plate 83.

The supporter 39 may be positioned between the reflective sheet 60 and the optical layer 30. The supporter 39 may be positioned between the reflective sheet 60 and the diffusion plate 31. The tip 392 of the supporter 39 may be adjacent to the rear surface of the diffusion plate 31. The front end of the tip 392 may be in contact with the rear surface of the diffusion plate 31, or spaced slightly apart from it to support the rear surface of the diffusion plate 31.

The supporter 39 may have elasticity. The supporter 39 may be an injection molded product. For example, the supporter 39 may include a plastic or resin material. The supporter 39 may include a material with excellent impact resistance and high-temperature reliability.

Accordingly, the gap between the diffusion plate and the light source may be maintained constant.

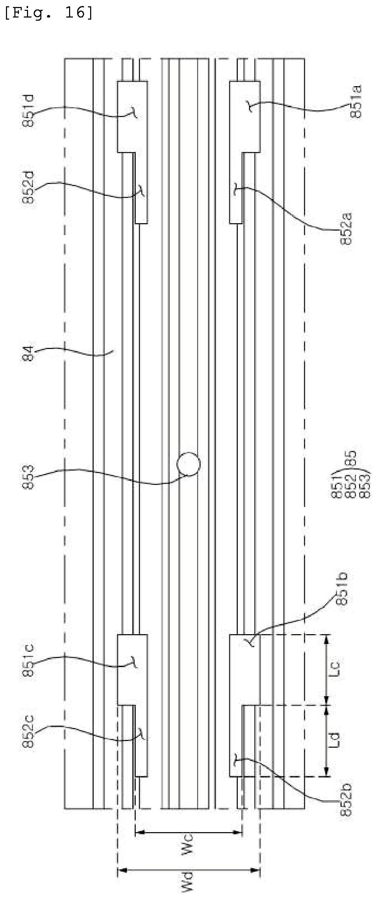

Referring to FIG. 16, a connecting portion 85 may be formed on the heat dissipation plate 83. The connecting portion 85 may be formed on the protruding portion 84.

The connecting portion 85 may include a plurality of insertion holes 851 that extend long in the longitudinal direction of the protruding portion 84, an engagement groove 852 formed on one side of each of the plurality of insertion holes 851, and a fixing hole 853 disposed between the plurality of insertion holes 851.

The plurality of insertion holes 851 may be formed long by cutting a portion of the protruding portion 84 in the longitudinal direction of the protruding portion 84. A plurality of insertion holes 851 may include a first insertion hole 851a which is spaced apart from the fixing hole 853 in the longitudinal direction of the protruding portion 84 and into which a first leg 393a is inserted, a second insertion hole 851b which faces the first insertion hole 851a in the longitudinal direction of the protruding portion 84 with respect to the fixing hole 853 and into which a second leg 393b is inserted, a third insertion hole 851c which is spaced apart from the second insertion hole 851b in the width direction of the protruding portion 84 and into which a third leg 393c is inserted, and a fourth insertion hole 851d which is spaced apart from the first insertion hole 851a in the width direction of the protruding portion 84 and faces the third insertion hole 851c with respect to the fixing hole 853 in the longitudinal direction of the protruding portion 84 and into which a fourth leg 393d is inserted.

A first engagement groove 852a may be formed by being recessed in the longitudinal direction of the protruding portion 84 at one boundary of the first insertion hole 851a. A second engagement groove 852b may be formed by being recessed in the longitudinal direction of the protruding portion 84 at one boundary of the second insertion hole 851b. A third engagement groove 852c may be formed by being recessed in the longitudinal direction of the protruding portion 84 at one boundary of the third insertion hole 851c. A fourth engagement groove 852d may be formed by being recessed in the longitudinal direction of the protruding portion 84 at one boundary of the fourth insertion hole 851d. The first to fourth engagement grooves 852a, 852b, 852c, 852d may all be formed by being recessed in the same direction.

The first to fourth insertion holes 851a, 851b, 851c, 851d may be formed by penetrating at least a portion among the side and front surfaces of the support rib 841 of the protruding portion 84 and grooves between the support ribs 841 adjacent to each other. For example, the first and second insertion holes 851a, 851b may be formed by penetrating a portion of the side and front surfaces of the support protrusion adjacent to one side of a support protrusion disposed in a center of the protruding portion 84, and a portion of groove. For example, the third and fourth insertion holes 851c, 851d may be formed by penetrating a portion of the side and front surfaces of the support protrusion adjacent to the other side of a support protrusion disposed in a center of the protruding portion 84, and a portion of groove.

The first to fourth engagement grooves 852a, 852b, 852c, 852d may be formed by penetrating a portion of the side surface of the support rib 841 of the protruding portion 84 and at least a portion of the groove between adjacent support ribs 841. For example, the first and second engagement grooves 852a, 852b may be formed by penetrating a portion of the side surface of the support protrusion adjacent to one side of the support protrusion disposed in the center of the protruding portion 84 and a portion of the groove. For example, the third and fourth engagement grooves 852c, 852d may be formed by penetrating a portion of the side surface of the support protrusion adjacent to the other side of the support protrusion disposed in the center of the protruding portion 84 and a portion of the groove.

The fixing hole 853 may be disposed on the front surface protruding forward from the support rib 841 of the protruding portion 84. For example, the fixing hole 853 may be disposed on the front of the support protrusion disposed in the center of the protruding portion 84. The fixing hole 853 may be disposed closer to the second insertion hole 851b and the third insertion hole 851c than to the first insertion hole 851a and the fourth insertion hole 851d. The fixed protrusion 394c may be inserted into the fixing hole 853.

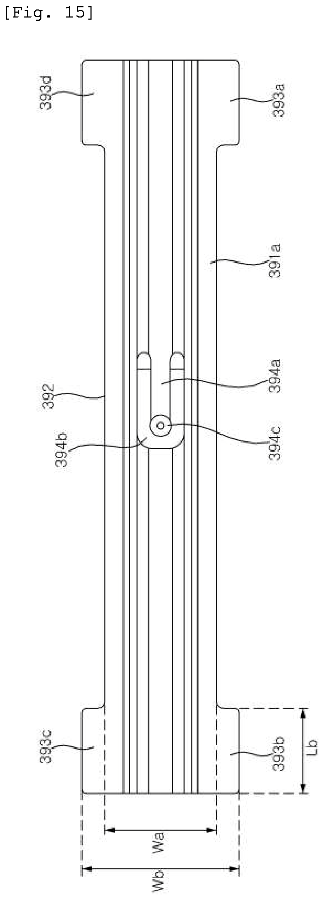

Referring again to FIG. 15 and FIG. 16, the length Lb of the plurality of legs 393 extending in the longitudinal direction of the supporter 39 may be equal to or smaller than the length Lc of the plurality of insertion holes 851 extending in the longitudinal direction of the protruding portion 84. The length Ld of the portion forming the boundary of the engagement groove 852 of the heat dissipation plate 83 may be equal to or greater than the length Lb of the legs 393.

The width Wb defined by both ends of the legs spaced apart in a direction intersecting with the longitudinal direction of the supporter 39 may be equal to or smaller than the width Wd defined by both ends of the insertion hole spaced apart in the width direction of the protruding portion 84. The width Wb defined by both ends of the legs spaced apart in a direction intersecting with the longitudinal direction of the supporter 39 may be greater than the width Wc defined by both ends of the engagement groove 852 spaced apart in the width direction of the protruding portion 84. The width Wa of the base 391a, defined in a direction intersecting with the longitudinal direction of the supporter 39, may be equal to or smaller than the width defined by the side surfaces of the support protrusions adjacent to both side surfaces of the support protrusion disposed at the center of the protruding portion 84.

The gap between the fixing hole 853 and the first insertion hole 851a may be greater than the gap between the fixed protrusion 394c and the first leg 393a.

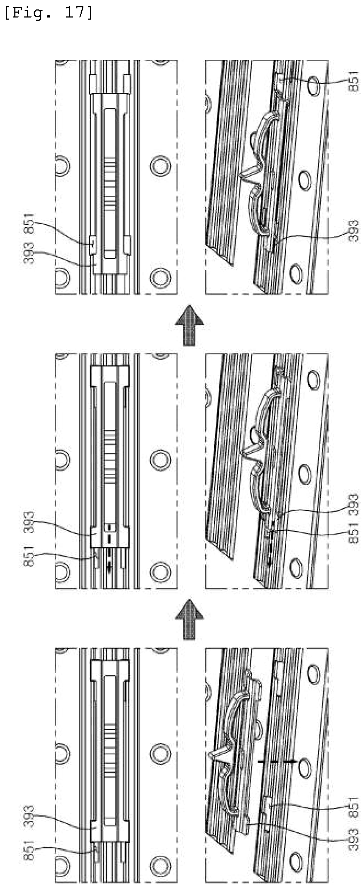

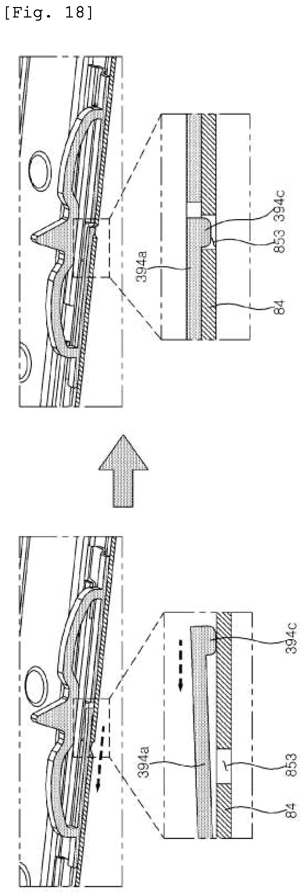

Referring to FIGS. 17 and 18, the supporter 39 may be positioned between adjacent first plates 412, 422, and may be detachably coupled to the coupling portion 85 in the longitudinal direction of the supporter 39. The supporter 39 may be detachably coupled to the coupling portion 85 while sliding along the longitudinal direction of the protruding portion 84.

The supporter 39 may be seated on the protruding portion 84. At this time, the rear surface of the supporter 39 comes in contact with the front surface of the protruding portion 84, and each of a plurality of legs 393 of the supporter 39 may be inserted into each of a plurality of insertion holes 851 of the coupling portion 85.

Each of the legs 393 inserted into the insertion hole 851 may be moved to one side along the longitudinal direction of the protruding portion 84. Each of the legs 393 may be moved from the insertion hole 851 to the engagement groove 852. At this time, a portion of the front surface of each of the plurality of legs 393 may be engaged with the rear surface of the portion forming the boundary of the engagement groove 852 of the heat dissipation plate 83. The engagement groove 852 may be positioned on a portion of the front surface of each of the plurality of legs 393. In addition, the fixed protrusion 393c may move along the front surface of the support protrusion of the protruding portion 84, and then be inserted into the fixing hole 853.

Accordingly, the supporter 39 coupled to the coupling portion 85 may be minimized from tilting up and down or left and right, and the stability of the supporter coupled to the heat dissipation plate or frame may be improved.

In addition, a user may couple the supporter 39 to the coupling portion 85 in a sliding manner, or detach the supporter 39 from the coupling portion 85. Accordingly, the supporter may be coupled to the heat dissipation plate or frame in a sliding manner in a narrow gap between light sources.

The diffusion plate 31 may be deformed. For example, the deformation of the diffusion plate 31 may occur due to a temperature rise resulting from the operation of the display device or due to the transport or storage of the display device. The deformation of the diffusion plate 31 may be sagging.

When the diffusion plate 31 sags, the tip 392 of the supporter 39 may support the diffusion plate 31. Depending on the degree of sagging of the diffusion plate 31, the elastic portion 391b, 391c, 391d may be deformed toward the base 391a. Depending on the degree of restoration of the diffusion plate 31, the elastic portion 391b, 391c, 391d may be restored to its original state by elastic force.

Accordingly, the supporter 39 may support the sagging of the diffusion plate 31 at a plurality of points. That is, the supporter 39 may maintain the gap between the reflective sheet 60 and the diffusion plate 31 at a certain level while minimizing damage to the diffusion plate 31.

As described above, according to at least one of the embodiments of the present disclosure, there may be provided a display device capable of improving the degradation of light performance of a backlight unit.

According to at least one of the embodiments of the present disclosure, there may be provided a display device capable of effectively dissipating heat generated from a substrate and a light source.

According to at least one of the embodiments of the present disclosure, there may be provided a display device capable of ensuring ease of assembly of a substrate to a heat dissipation plate or frame.

According to at least one of the embodiments of the present disclosure, there may be provided a display device capable of increasing the rigidity of a heat dissipation plate or frame.

According to at least one of the embodiments of the present disclosure, there may be provided a display device capable of maintaining a constant gap between a diffusion plate and a light source.

According to at least one of the embodiments of the present disclosure, there may be provided a supporter capable of being slidably coupled to a heat dissipation plate or frame in a narrow gap between light sources.

According to at least one of the embodiments of the present disclosure, there may be provided a structure that improves the stability of a supporter coupled to a heat dissipation plate or frame.

Referring to FIGS. 1 to 18, a display device 1 may include: a display panel 10; a display panel 10; a frame 80 positioned at a rear of the display panel 10; a substrate 40 which is positioned between the display panel 10 and the frame 80, and coupled to the frame 80; and a heat dissipation plate 83 which is positioned between the substrate 40 and the frame 80, and coupled to the substrate 40 and the frame 80, wherein the substrate 40 may include a plurality of first plates 412, 422 which are elongated and spaced apart from each other, and wherein the heat dissipation plate 83 may include a bent portion 84 which protrudes forward toward the display panel 10 and is disposed between adjacent first plates among the plurality of first plates 412, 422.

The display device 1 further may include: a plurality of light sources 51 which are positioned on the substrate 40, and spaced apart from each other; and a reflective sheet 60 which is positioned on the substrate 40, covers the plurality of first plates 412, 422 and a space between the plurality of first plates 412, 422, and may include a hole 611 through which the light sources penetrate, and the bent portion 84 comes in contact with at least a portion of a rear surface of the reflective sheet 60 to support the reflective sheet 60.

The substrate 40 may further includes a second plate 411, 421 which extends in a direction intersecting with a longitudinal direction of the first plates 412, 422 and which is connected to one end of the first plates 412, 422, and the bent portion 84 is elongated in the longitudinal direction of the first plates 412, 422 from the other end of the first plates 412, 422 to the second plate 411, 421.

A height Ha by which the bent portion 84 protrudes forward may be equal to or smaller than a thickness of the substrate 40, and a width La of the bent portion 84 defined in a longitudinal direction of the second plate 411, 421 may be equal to or smaller than a gap Gb between adjacent first plates among the first plates 412, 422.

One end of the bent portion 84 supports the second plate 411, 421, and the heat dissipation plate 83 may further include a hole 86 which is disposed adjacent to one end of the bent portion 84 and extends in a width direction of the bent portion 84, and a length of the extended hole 86 is greater than or equal to a width La of the bent portion 84.

The bending portion 84 may include: at least one support rib 841 which protrudes forward and which is elongated in the longitudinal direction of the first plates 412, 422; and a guide rib 84a, 84bwhich protrudes forward, disposed in both ends or one end in a longitudinal direction of the support rib 841, and is elongated in a direction intersecting with the longitudinal direction of the first plates 412, 422.

The first plates 422 may include: at least one first bending portion 4221 protruding convexly in a first direction intersecting with the longitudinal direction of the first plates 422; and at least one second bending portion 4222 which extends from the first bending portion 4221, and protrudes in a direction opposite to the first direction, and the first bending portion 4221 and the second bending portion 4222 are alternately disposed along the longitudinal direction of the first plates 422, and the bending portion 84 has a shape, between adjacent first plates, that corresponds to a shape in which the first bending portion 4221 and the second bending portion 4222 may protrude.

The heat dissipation plate 83 may include a thermally conductive material.

The display device further may include: an optical layer 30 positioned between the display panel 10 and the plurality of light sources 51; and a supporter 39, which is positioned between the optical layer 30 and the substrate 40, that supports the optical layer 30, and the bent portion 84 may include a coupling portion 85 into which the supporter 39 is inserted and fixed, and the supporter 39 is elongated, positioned between the first plates 412, 422, and detachably coupled to the coupling portion 85 in a longitudinal direction of the supporter 39.

The supporter 39 may include: a base 391a extending in the longitudinal direction of the supporter 39; and a plurality of legs 393 protruding from the base 391a toward the first plate 412, 422 of the substrate 40. The coupling portion 85 may include: a plurality of insertion holes 851 into which each of the plurality of legs 393 is inserted, the plurality of insertion holes 851 being elongated by cutting a portion of the bent portion 84 in a longitudinal direction of the bent portion 84; and an engagement groove 852 formed on one side of each of the plurality of insertion holes 851, and the engagement groove 852 is positioned on a portion of a front surface of each of the plurality of legs 393.

A length Ld of a portion forming a boundary of the engagement groove 852 of the heat dissipation plate 83 may be equal to or greater than a length Lb of the legs 393.

The supporter 39 may include a fixed protrusion 394c protruding from the base 391a toward the heat dissipation plate 83, and the coupling portion 85 may further include a fixing hole 853 which is disposed between the plurality of insertion holes 851, and into which the fixed protrusion 394c may be inserted.

The plurality of insertion holes 851 may include: a first insertion hole 851a spaced apart from the fixing hole 853 in the longitudinal direction of the bent portion 84; and a second insertion hole 851b opposite to the first insertion hole 851a with respect to the fixing hole 853. The plurality of legs 393 may include: a first leg 393a which protrudes from one end of the base 391a in a direction intersecting with the longitudinal direction of the supporter 39, and is inserted into the first insertion hole 851a; and a second leg 393b which protrudes from the other end of the base 391a in the direction intersecting with the longitudinal direction of the supporter 39, and may be inserted into the second insertion hole 851b, and a gap between the fixing hole 853 and the first insertion hole 851a may be greater than a gap between the fixed protrusion 394c and the first leg 393a.

The supporter 39 further may include: an elastic portion 391b, 391c, 391d which has one end and the other end that are fixed to a front surface of the base 391a, and forms an arc, between the one end and the other end, in a direction from the base 391a toward the optical layer 30; and a tip 392 extending toward the optical layer 30 on the elastic portion, and a front end of the tip 392 supports a rear surface of the optical layer 30.

A display device 1 according to an aspect of the present disclosure may include: a display panel 10; a frame 80 positioned at a rear of the display panel 10; and a substrate 40 which is positioned between the display panel 10 and the frame 80, and coupled to the frame 80, wherein the substrate 40 may include a plurality of first plates 412, 422 which are elongated and spaced apart from each other, and wherein the frame 80 may include a bent portion 84 which protrudes forward toward the display panel 10 and is disposed between adjacent first plates among the plurality of first plates 412, 422.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The above detailed description should not be construed as restrictive in all respects and should be considered as illustrative. The scope of the present disclosure should be determined by a reasonable interpretation of the appended claims, and all modifications within the equivalent scope of the present disclosure are included in the scope of the present disclosure.

## Claims

1. A display device comprising:
a display panel;
a frame positioned at a rear of the display panel;
a substrate positioned between the display panel and the frame, and coupled to the frame; and
a heat dissipation plate positioned between the substrate and the frame, and coupled to the substrate and the frame,
wherein the substrate comprises a plurality of first plates which are elongated and spaced apart from each other, and
wherein the heat dissipation plate comprises a bent portion which protrudes forward toward the display panel and which is disposed between adjacent first plates among the plurality of first plates.

2. The display device of claim 1, further comprising:
a plurality of light sources positioned on the substrate, and spaced apart from each other; and
a reflective sheet positioned on the substrate, covers the plurality of first plates and a space between the plurality of first plates, and includes a hole through which the light sources penetrate,
wherein the bent portion comes in contact with at least a portion of a rear surface of the reflective sheet to support the reflective sheet.

3. The display device of claim 1, wherein the substrate further comprises a second plate which extends in a direction intersecting with a longitudinal direction of the first plates and which is connected to one end of the first plates, and
wherein the bent portion is elongated in the longitudinal direction of the first plates from the other end of the first plates to the second plate.

4. The display device of claim 3, wherein a height by which the bent portion protrudes forward is equal to or smaller than a thickness of the substrate, and a width of the bent portion defined in a longitudinal direction of the second plate is equal to or smaller than a gap between adjacent first plates among the first plates.

5. The display device of claim 3, wherein one end of the bent portion supports the second plate, and
wherein the heat dissipation plate further comprises a hole which is disposed adjacent to one end of the bent portion and which extends in a width direction of the bent portion,
wherein a length of the extended hole is greater than or equal to a width of the bent portion.

6. The display device of claim 3, wherein the bending portion comprises:
at least one support rib which protrudes forward and which is elongated in the longitudinal direction of the first plates; and
a guide rib which protrudes forward, disposed in both ends or one end in a longitudinal direction of the support rib, and which is elongated in a direction intersecting with the longitudinal direction of the first plates.

7. The display device of claim 3, wherein the first plates comprise:
at least one first bending portion protruding convexly in a first direction intersecting with the longitudinal direction of the first plates; and
at least one second bending portion which extends from the first bending portion, and which protrudes in a direction opposite to the first direction,
wherein the first bending portion and the second bending portion are alternately disposed along the longitudinal direction of the first plates, and
wherein the bending portion has a shape, between adjacent first plates, that corresponds to a shape in which the first bending portion and the second bending portion protrude.

8. The display device of claim 1, wherein the heat dissipation plate comprises a thermally conductive material.

9. The display device of claim 2, further comprising:
an optical layer positioned between the display panel and the plurality of light sources; and
a supporter positioned between the optical layer and the substrate, that supports the optical layer,
wherein the bent portion comprises a coupling portion into which the supporter is inserted and fixed, and
wherein the supporter is elongated, positioned between the first plates, and detachably coupled to the coupling portion in a longitudinal direction of the supporter.

10. The display device of claim 9, wherein the supporter comprises:
a base extending in the longitudinal direction of the supporter; and
a plurality of legs protruding from the base toward the first plate of the substrate,
wherein the coupling portion comprises:
a plurality of insertion holes into which each of the plurality of legs is inserted, the plurality of insertion holes being elongated by cutting a portion of the bent portion in a longitudinal direction of the bent portion; and
an engagement groove formed on one side of each of the plurality of insertion holes,
wherein the engagement groove is positioned on a portion of a front surface of each of the plurality of legs.

11. The display device of claim 10, wherein a length of a portion forming a boundary of the engagement groove of the heat dissipation plate is equal to or greater than a length of the legs.

12. The display device of claim 10, wherein the supporter comprises a fixed protrusion protruding from the base toward the heat dissipation plate, and
wherein the coupling portion further comprises a fixing hole which is disposed between the plurality of insertion holes, and into which the fixed protrusion is inserted.

13. The display device of claim 12, wherein the plurality of insertion holes comprise:
a first insertion hole spaced apart from the fixing hole in the longitudinal direction of the bent portion; and
a second insertion hole opposite to the first insertion hole with respect to the fixing hole,
wherein the plurality of legs comprise:
a first leg which protrudes from one end of the base in a direction intersecting with the longitudinal direction of the supporter, and is inserted into the first insertion hole; and
a second leg which protrudes from the other end of the base in the direction intersecting with the longitudinal direction of the supporter, and which is inserted into the second insertion hole, and
wherein a gap between the fixing hole and the first insertion hole is greater than a gap between the fixed protrusion and the first leg.

14. The display device of claim 10, wherein the supporter further comprises:
an elastic portion which has one end and the other end that are fixed to a front surface of the base, and forms an arc, between the one end and the other end, in a direction from the base toward the optical layer; and
a tip extending toward the optical layer on the elastic portion,
wherein a front end of the tip supports a rear surface of the optical layer.

15. A display device comprising:
a display panel;
a frame positioned at a rear of the display panel; and
a substrate positioned between the display panel and the frame, and coupled to the frame,
wherein the substrate comprises a plurality of first plates which are elongated and spaced apart from each other, and
wherein the frame comprises a bent portion which protrudes forward toward the display panel and which is disposed between adjacent first plates among the plurality of first plates.
